# EUROPEAN PATENT APPLICATION

(11) **EP 1 082 896 A1**
(43) Date of publication of application: **14.03.2001**
(21) Application number: 00119561.9
(22) Date of filing: 07.09.2000
(51) Int. Cl.: A01K 5/00

(54) **Cutter-mixer wagon with vertical axis for fodder and grass silage having rotor with modified profile**

(30) Priority: 09.09.1999 IT VI990076 U
(71) Applicant: Loppoli, Giuseppe, 35010 Grantorto (PD) (IT)
(72) Inventor: Loppoli, Giuseppe, 35010 Grantorto (PD) (IT)
(74) Representative: Bonini, Ercole

(57) **Abstract**

Cutter-mixer wagon (1) for fodder and grass silage, comprising a culling-mixing screw (2) constituted by a container (3), the inside of which is provided with a helical element (6) whose conical profile converges upwards, said helical element rotating around a shaft (7) that defines a substantially vertical longitudinal rotation axis (Y). The outer edge (10) of the helical element (6) is provided with one or more shaped areas (12, 13), radially re-entrant with respect to said longitudinal rotation axis (Y) and defining radial widened areas (14, 15) of the interspace (16) defined between the helical element (6) and the inner lateral surface (3b) of the container (3), which ensure, during the rotation of the helical element (6), the generation of preferential flows of material upwards (17) or downwards (18).

## Description

The invention concerns a cutter-mixer wagon for fodder and grass silage, with a cutting-mixing screw with vertical axis provided with helical element with modified profile.

It is already known that cutter-mixer wagons are equipment for the cutting and mixing of hay, fodder and grass silage in general, suitable for feeding livestock.

According to a known application, they comprise a screw with vertical axis consisting of a preferably cylindrical or truncated cone-shaped container, the inside of which is provided with a helical element, mounted on a frame equipped with wheels and with coupling elements suitable for permitting pulling by means of a tractor.

The helical element is wound around a revolving shaft that defines the vertical longitudinal axis of the screw and is operated by the tractor engine, for example through a cardan-joint transmission. The upper part of the container is provided with a main opening through which the silage that must be cut is introduced, while there are also secondary openings at the sides, towards which the helical element conveys the cut material that will be unloaded.

The outer edge of the helical element is provided with projecting blades that can be fixed or rotary, with preferably toothed profile suitable for improving the cutting efficiency during the rotation of the helical element.

To increase the cutting efficiency, the inner lateral surface of the container is provided with the same number of projecting blades in a substantially horizontal position, which cooperate with the blades present on the helical element, especially in correspondence with the container base, for the cutting of the material.

One of the drawbacks of the wagons of the known type is represented by the fact that the cutting efficiency is rather low and decidedly lower, for example, than that of cutter-mixer wagons with horizontal screws.

This drawback is due to the fact that during the rotation of the helical element the materal is cut, but is also shifted and rotated inside the container, in the direction of rotation of the helical element itself.

Obviously, this results in decreased cutting efficiency, increased operating times and consequently reduced productivity of the wagon.

The present invention aims at eliminating the above mentioned drawback.

In particular, one of the first aims of the invention is to implement a cutter-mixer wagon with screw with vertical axis for fodder and grass sitage, whose cutting efficiency is higher than that of the known cutter-mixer wagons used for the same purpose.

The aim mentioned above has been achieved through the implementation of a cutter-mixer wagon for fodder and grass silage that, according to the main claim, comprises a cutting-mixing screw constituted by a container with an opening facing upwards, supported by a frame resting on wheels, the inside of said container being provided with a helical element whose conical profile converges towards said opening, said helical element rotating around a shaft that defines a substantially vertical longitudinal rotation axis and being provided with cutting blades applied on its outer edge, and is characterized in that said outer edge has one or more shaped areas that are radially re-entrant with respect to said longitudinal rotation axis and create radial widened areas of the interspace defined between said helical element and said container, said widened areas being suitable for ensuring, during the rotation of the helical element, preferential flows of material in upward and downward direction.

The cutting blades have preferably circular profile.

According to a favourite application of the invention, the shaped re-entrant areas are two, substantially opposite each other at 180°, and are obtained one near the lower end of the helical element and one near the upper end of the helical element itself.

To advantage, the presence of the shaped re-entrant areas in the spiral facilitates the upward and downward movement of the material to be cut, a movement that when combined with the circular motion generated by the rotation of the helical element improves the cutting efficiency.

The mentioned aims and advantages will be highlighted in greater detail in the description of a possible application of the invention in question, illustrated in the attached drawings, wherein:
- Fig. 1 shows a longitudinal section of the wagon object of the invention;
- Fig. 2 is a top view of the wagon of Figure 1;
- Fig. 3 is an axonometric view of the spiral of the wagon of Figure 1 without blades;
- Fig. 4 shows the spiral of Figure 3 provided with blades.

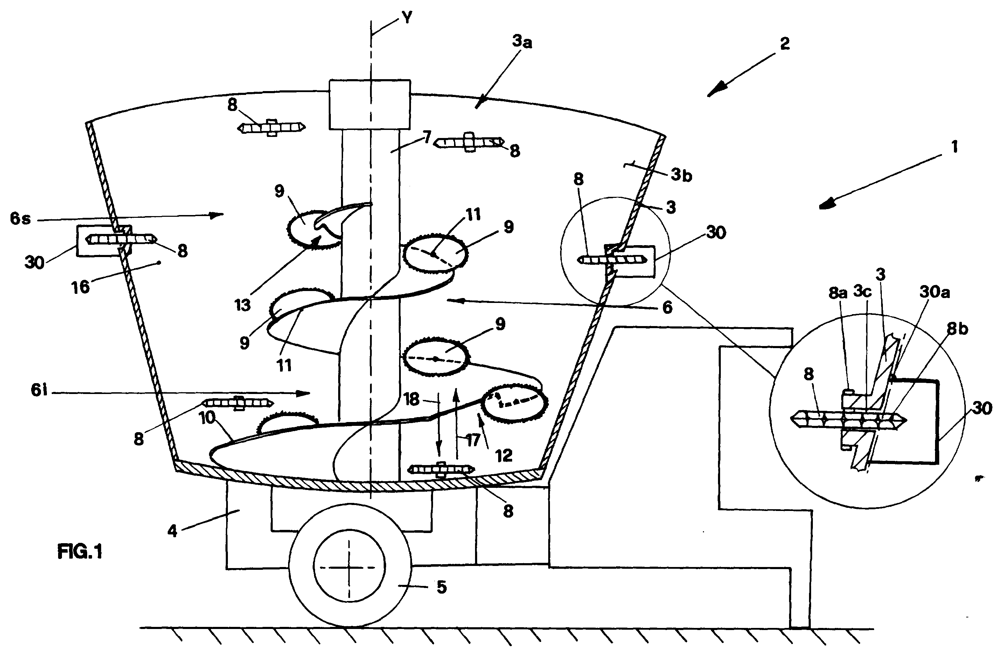

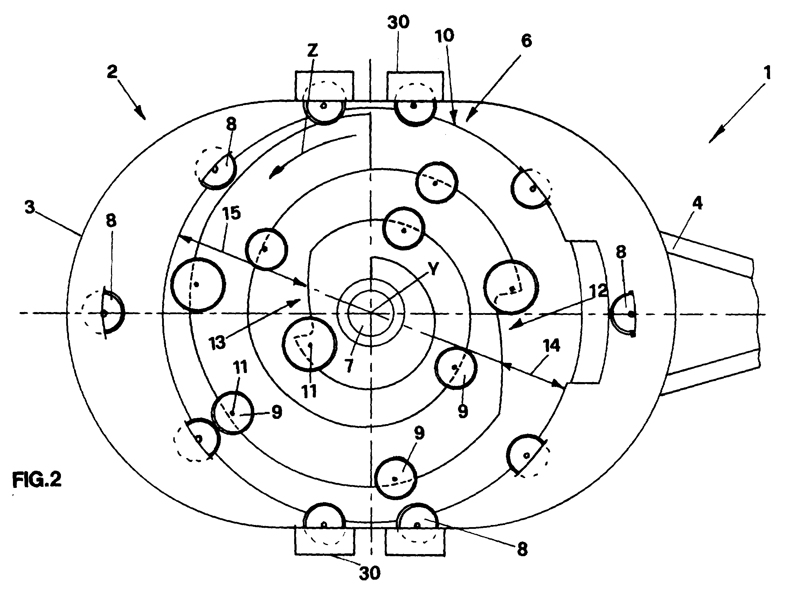

As it can be observed in Figures 1 and 2, the cutter-mixer wagon of the invention, indicated as a whole by 1, comprises a cutting-mixing screw 2, constituted by a substantially truncated-cone shaped container 3 tapering upwards and ending with an upper opening 3a, supported by a frame 4 resting on wheels 5, the inside of said container being provided with a helical element indicated as a whole by 6.

The helical element 6, as it can be observed, has a conical profile that converges towards the opening 3a and is wound around a rotary shaft 7 that defines a vertical longitudinal rotation axis Y coinciding with the longitudinal axis of the container 3.

The inner lateral wall 3b of the container 3 is preferably, but not necessarily provided with a plurality of first blades 8, preferably, but not necessarily circular in shape.

As it can be observed in Figure 1, each first blade 8 is positioned so that it passes through a slot 3c made in the container 3, in such a way as to be projecting either towards the inside and towards the outside of the container.

Each blade is hinged through a rotation pin 8a, with respect to which it is preferably subject to friction by means of suitable friction means of the known type, in such a way as to feature a controlled rotation movement when it comes into contact with the material to be cut.

The part 8b of the blade 8 that projects towards the outside of the container is protected by a casing 30 connected to the container 3 by means of a hinge 30a, which makes it possible to reach the blade and replace it when worn.

The helical element 6 is provided with second blades 9, preferably, but not necessarily circular in shape, applied onto the outer edge 10 of the helical element itself through connection means preferably constituted by pins 11, around which each blade 9 rotates idly, if necessary under the friction generated by suitable friction means.

The first and second blades 8 and 9 are provided with cutting edge with toothed profile to ensure improved cutting efficiency.

During the rotation of the shaft 7, the cutting action on the material placed inside the container 3 takes place thanks to the cutting power of the blades, generated mainly in the lower part of the container, where the second blades 9 of the helical element cooperate with the first blades 8 of the container by skimming against them.

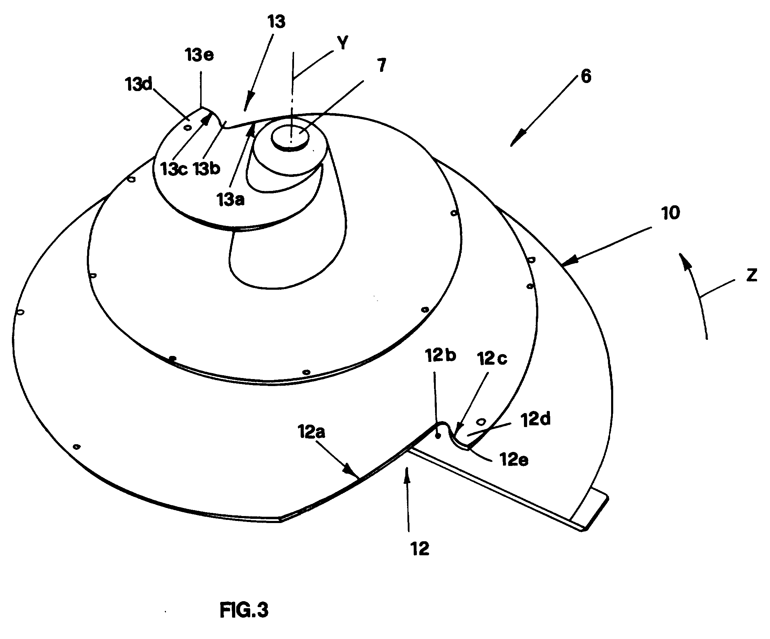

The helical element 6 is shown in greater detail in Figure 3, where it is represented without the second cutting blades.

According to the invention, the outer edge 10 of the helical element 6 is provided with one or more shaped areas 12, 13, radially re-entrant with respect to the longitudinal rotation axis Y, creating radial widened areas 14, 15 of the interspace 16 defined between said helical element 6 and the inner lateral surface 3b of said container 3 that houses it, said widened areas being suitable for permitting, during the rotation of said helical element, the generation of preferential flows of material upwards 17 and downwards 18.

According to the favourite application described, the shaped areas, as shown in detail in Figure 2, comprise a first shaped area 12 near the lower part 6i of the helical element 6, where the diameter is longer, and a second shaped area 13 in the upper part 6s of the helical element, which are substantially opposing each other at 180°.

Each shaped area has a convex profile 12a, 13a, facing the inner lateral surface 3b of the container, which is radially and progressively re-entrant starting from the outer edge 10, getting gradually near the longitudinal axis Y of the helical element according to the anticlockwise direction of rotation Z of the helical element 6 itself.

It can be observed, in particular, that the area of the convex profile 12a, 13a that is most re-entrant 12b, 13b is joined to the outer edge 10 of the helical element 6 by means of a shaped line 12c, 13c with preferably convex profile, defining a tooth 12d, 13d provided with a cusp-shaped end 12e, 13e.

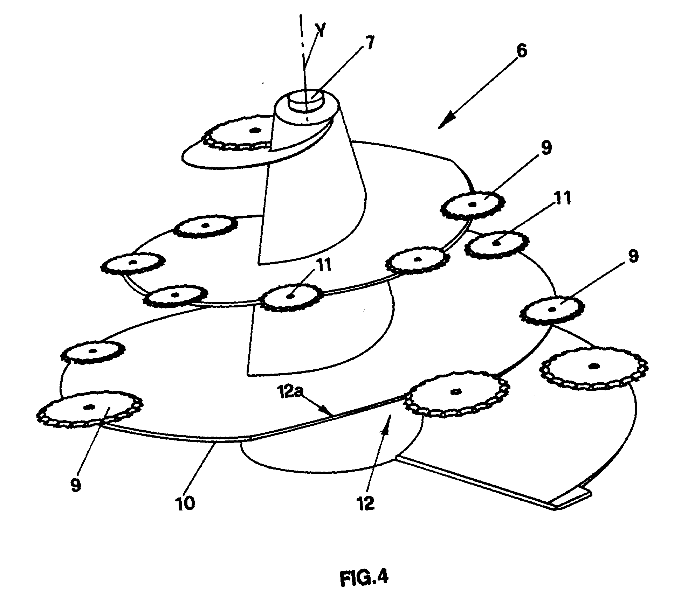

Near each tooth, as shown in Figure 4, there is a second blade 9 that facilitates the cutting of the material right in correspondence with the relevant shaped area 12, 13.

From an operational point of view, during the rotation of the helical element 6, the material to be cut contained in the container 3 is subject to the cutting action of the blades.

The material is also set rotating by the rotation of the helical element, but this circular movement is substantially cancelled by the presence of the shaped areas 12, 13, which generate an upward or downward vertical movement of the material in the directions indicated by the arrows 17 or 18 along the radial widened areas 14, 15, where the material is conveyed during the cutting procedure.

In this way the cutting efficiency is improved in comparison with that of the cutter-mixer wagons with vertical axis of the known type.

Obviously, upon implementation the helical element may be provided with any number of radially re-entrant shaped areas, in any position, and with any number of second cutting blades.

The mentioned changes and any other that have not been mentioned, but are included in the inventive concepts expressed in the following claims, are to be considered protected by the patent.

## Claims

1. Cutter-mixer wagon (1) for fodder and grass silage, comprising a cutting-mixing screw (2) constituted by a container (3) with an opening (3a) facing upwards, supported by a frame (4) resting on wheels (5), the inside of said container being provided with a helical element (6) whose conical profile converges towards said opening (3a), said helical element rotating around a shaft (7) that defines a substantially vertical longitudinal rotation axis (Y) and provided with cutting blades (9) applied onto its outer edge (10), **characterized in that** said outer edge (10) of said helical element (6) has one or more shaped areas (12, 13) that are radially re-entrant with respect to said longitudinal rotation axis (y) and create radial widened areas (14, 15) of the interspace (16) defined between said helical element (6) and the inner lateral surface (3b) of said container (3) that houses it, said widened areas being suitable for ensuring, during the rotation of the helical element (6), the generation of preferential flows of material in upward (17) and downward direction (18).

2. Cutter-mixer wagon (1) according to claim 1), **characterized in that** said shaped re-entrant areas (12, 13) are two and are obtained one near the lower end (6i) of the helical element (6) and the other near the upper end (6s) of the helical element (6) itself.

3. Cutter-mixer wagon (1) according to claim 2), **characterized in that** said two shaped re-entrant areas (12, 13) are diametrically opposite each other.

4. Cutter-mixer wagon (1) according to claim 1), **characterized in that** each one of said shaped areas (12, 13) has a convex profile (12a, 13a), radially and progressively re-entrant starting from the outer edge (10) of the helical element (6), according to the direction of rotation (Z) of the helical element (6) itself.

5. Cutter-mixer wagon (1) according to claim 4), **characterized in that** the area (12b, 13b) of said convex profile (12a, 13a) that is most re-entrant is joined to the outer edge (10) of the helical element (6) by means of a shaped line (12c, 13c) that defines a tooth (12d, 13d) with cusp-shaped end (12e, 13e).

6. Cutter-mixer wagon (1) according to claim 5), **characterized in that** near said tooth (12d, 13d) there is one of said cutting blades (9).

7. Cutter-mixer wagon (1) according to claim 1), **characterized in that** it comprises cutting blades (8) applied to the inner lateral surface (3b) of said container (3) and second cutting blades (9) applied onto the outer edge (10) of said helical element (6).

8. Cutter-mixer wagon (1) according to claim 1) or 7), **characterized in that** said cutting blades (8, 9) are circular blades provided with cutting edge with toothed profile.

9. Cutter-mixer wagon (1) according to claim 6), **characterized in that** each cutting blade (9) is applied to said helical element (6) by means of fastening pins (11).

10. Cutter-mixer wagon (1) according to claim 7), **characterized in that** each cutting blade (8) applied to the lateral surface of said container (3) passes through a slot (3c) made in the container (3) itself, to which it is rotatingly fixed through a fastening pin (8a).

11. Cutter-mixer wagon (1) according to claim 10), **characterized in that** said cutting blade (8) has a part (8b) that projects outside said container (3), with a protection casing (30) connected to said container (3) through a hinge (30a).

12. Cutter-mixer wagon (1) according to claim 9) or 10), **characterized in that** each cutting blade (8, 9) is idle with respect to the corresponding pin (8a, 11).

13. Cutter-mixer wagon (1) according to claim 9), **characterized in that** each cutting blade (8, 9) is subject to friction with respect to the corresponding pin (8a, 11).
